# EUROPÄISCHE PATENTSCHRIFT

(11) **EP 4 342 352 B1**
(45) Veröffentlichungstag und Bekanntmachung des Hinweises auf die Patenterteilung: **12.03.2025**
(21) Anmeldenummer: 22197795.2
(22) Anmeldetag: 26.09.2022
(51) Int. Cl.: B60T 7/12, B60T 1/12

(54) **AUTONOMES ARBEITSGERÄT UND ANTRIEBSEINHEIT FÜR EIN AUTONOMES ARBEITSGERÄT**
AUTONOMOUS WORKING DEVICE AND DRIVE UNIT FOR AUTONOMOUS WORKING DEVICE
APPAREIL DE TRAVAIL AUTONOME ET UNITÉ D'ENTRAÎNEMENT POUR UN APPAREIL DE TRAVAIL AUTONOME

(43) Veröffentlichungstag der Anmeldung: 27.03.2024
(73) Patentinhaber: Vorwerk & Co. Interholding GmbH, 42270 Wuppertal (DE)
(72) Erfinder: ENGELS, Fabian, 42719 Solingen (DE)
(74) Vertreter: Dr. Solf & Zapf Patent- und Rechtsanwalts PartG mbB

(56) Entgegenhaltungen:
- DE-A1- 102018 219 575
- DE-A1- 102019 209 831
- GB-A- 2 592 405
- US-A1- 2005 029 864
- US-A1- 2019 193 499
- US-A1- 2019 310 626
- US-A1- 2022 107 648

## Beschreibung

Die Erfindung betrifft ein Arbeitsgerät, insbesondere ein Reinigungsgerät zum autonomen Reinigen einer Bearbeitungsumgebung, mit mindestens einem Gehäuse, mindestens einer Antriebseinheit und mindestens einer Steuereinrichtung. Die Antriebseinheit weist mindestens einen Motor und mindestens ein Antriebsrad auf. Das Arbeitsgerät ist dazu ausgebildet und eingerichtet, sich in einer Bearbeitungsumgebung autonom fortzubewegen.

Gattungsgemäße Arbeitsgeräte sind im Stand der Technik in einer Vielzahl von Ausgestaltungen bekannt. Derartige Arbeitsgeräte sind dazu ausgebildet, sich in einer Bearbeitungsumgebung autonom fortzubewegen und Arbeitsaufgaben zu erledigen. Ein Beispiel für solche Arbeitsgeräte sind Reinigungsgeräte, die in einer Bearbeitungsumgebung Reinigungsaufgaben erledigen, Transportroboter in der Lagerlogistik oder Sicherheitsroboter, die zu Überwachungszwecken eingesetzt werden. Ein Reinigungsgerät ist beispielsweise als Saugroboter, Wischroboter oder Saug- und Wischroboter ausgebildet. Üblicherweise verfügen derartige Arbeitsgeräte über mindestens eine Steuereinrichtung, die eine Datenverarbeitungseinrichtung umfasst, und die mit einer Mehrzahl von Sensoren eine Navigation des Arbeitsgerätes in der Bearbeitungsumgebung gewährleistet sowie das Erledigen von Arbeitsaufgaben in der Bearbeitungsumgebung steuert.

Aus US 2005/002864 A1 ist ein gattungsgemäßes autonomes Nutzfahrzeug bekannt, das eine Notfallbremseinrichtung aufweist. Dabei sieht der aus US 2005/002864 A1 bekannte Gegenstand vor, dass bei einem Notbremsvorgang ein Antriebsaggregat des Nutzfahrzeugs abgeschaltet wird, so dass dieser aufgrund seines Motors ein Bremsmoment erzeugt.

Als Reinigungsgeräte ausgebildete Arbeitsgeräte, die für gewerbliche Anwendungen geeignet sind, verfügen gegenüber Reinigungsgeräten, die in Haushalten eingesetzt werden, üblicherweise über ein größeres Bauvolumen, höheres Gewicht, höhere Bewegungsgeschwindigkeiten und mehr Leistung. Darüber hinaus werden erhöhte Anforderungen an die Betriebssicherheit gestellt, z. B. hinsichtlich der Absturzgefahr an Kanten und Treppen sowie bei Kontakt zu Personen oder weiteren Arbeitsgeräten.

Für die Betriebssicherheit eines Arbeitsgerätes ist es daher von gesteigerter Bedeutung, dass bei Erkennen eines Hindernisses oder einer kritischen Betriebssituation eine unverzügliche Reaktion des sich bewegenden Arbeitsgerätes erforderlich ist, um eine Schädigung im Umfeld des Arbeitsgerätes und/oder eine Beschädigung des Arbeitsgerätes zu verhindern.

Der Erfindung liegt daher die Aufgabe zugrunde, ein Arbeitsgerät, insbesondere für gewerbliche Anwendungen, anzugeben, bei dem die Betriebssicherheit gesteigert ist.

Die vorgenannte Aufgabe ist bei einem gattungsgemäßen Arbeitsgerät gemäß dem Kennzeichnungsteil des Anspruchs 1 gelöst. Es ist ein Notbremssystem vorhanden. Das Notbremssystem weist mindestens ein Bremselement auf und ist von der Steuereinrichtung des Arbeitsgeräts steuerbar, also beispielsweise auslösbar und freigebbar bzw. deaktivierbar. Nach Auslösen des Notbremssystems wirkt das Bremselement zum Erzielen einer Bremswirkung derart formschlüssig mit mindestens einem sich im Betrieb des Arbeitsgerätes bewegenden Bauteil der Antriebseinheit zusammen, dass die Bewegung des Bauteils gestoppt bzw. blockiert wird. Dadurch wird eine Bewegung des Arbeitsgerätes gestoppt bzw. blockiert. Bei dem sich bewegenden Bauteil handelt es sich insbesondere um ein Bauteil, das sich zur Bewirkung einer Bewegung des Arbeitsgeräts bewegt, insbesondere rotiert, beispielsweise den Rotor eines Motors, eine Motorwelle, einen an der Motorwelle angeordneten Bremskörper oder ein Antriebsrad. Das Bremselement wirkt vorteilhaft mittelbar oder unmittelbar formschlüssig mit dem Bauteil zusammen, um die Bewegung des Bauteils zu stoppen bzw. das Bauteil zu blockieren. Ein mittelbares Zusammenwirken ist beispielsweise dann realisiert, wenn das Bremselement formschlüssig mit einem Bauteil zusammenwirkt, das fest mit dem zu stoppenden Bauteil verbunden ist. Der Formschluss wird beispielsweise derart erzeugt, dass eine Rotation des Bauteils, mit dem das Bremselement formschlüssig zusammenwirkt, gestoppt wird.

Das Arbeitsgerät ist zur autonomen Fortbewegung in einer Bearbeitungsumgebung und zur Erledigung von Arbeitsaufgaben ausgebildet. Beispielsweise ist das Arbeitsgerät als Reinigungsgerät, Transportgerät in der Transportlogistik oder Sicherheitsroboter zur Umgebungsüberwachung ausgebildet.

Vorzugsweise ist das Arbeitsgerät als Reinigungsgerät zum Reinigen einer Bearbeitungsumgebung ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Das Arbeitsgerät verfügt insbesondere über mindestens eine Steuereinrichtung und eine Mehrzahl an Sensoren, die das autonome Bewegen und Reinigen einer Bearbeitungsumgebung durch das Reinigungsgerät steuern. Die Steuereinrichtung weist vorzugsweise mindestens eine Datenverarbeitungseinrichtung mit mindestens einem Prozessor und mindestens einem Speicher auf.

Vorzugsweise weist das Arbeitsgerät mindestens eine zweite Steuereinrichtung auf. Die zweite Steuereinrichtung weist vorteilhaft mindestens eine Datenverarbeitungseinrichtung mit mindestens einem Prozessor und mindestens einem Speicher auf. Die zweite Steuereinrichtung ist dazu ausgebildet und eingerichtet, zumindest einen Teil der Aufgaben oder alle Aufgaben der ersten Steuereinrichtung als redundantes System zu übernehmen, falls eine Fehlfunktion bei der ersten Steuereinrichtung vorliegt. Insbesondere ist die zweite Steuereinrichtung ebenfalls zur Steuerung, insbesondere zum Auslösen und Freigeben, des Notbremssystems ausgebildet.

An dem Gehäuse des Arbeitsgeräts sind beispielsweise mindestens oder genau zwei Antriebseinheiten angeordnet, die jeweils mindestens einen Motor, insbesondere einen Elektromotor, und mindestens ein Antriebsrad aufweisen. Der Motor ist vorzugsweise ein bürstenloser Gleichstrommotor, insbesondere ein als Außenläufer ausgebildeter, bürstenloser Gleichstrommotor. Die beiden Motoren der Antriebseinheiten sind unabhängig voneinander ansteuerbar. Jeder Motor treibt zumindest mittelbar mindestens oder genau ein Antriebsrad an. Es ist beispielsweise auch vorgesehen, dass zwischen Motor und Antriebsrad einer Antriebseinheit ein Getriebe angeordnet ist.

Jede Antriebseinheit ist beispielsweise zumindest teilweise im Wesentlichen vertikal bewegbar, also im Wesentlichen orthogonal zu einer Oberfläche der Bearbeitungsumgebung, an bzw. zumindest teilweise in dem Gehäuse, insbesondere einer Unterseite des Gehäuses, angeordnet.

Des Weiteren weist das Arbeitsgerät mindestens einen Energiespeicher auf, der zur Spannungsversorgung des Arbeitsgerätes, insbesondere zur Spannungsversorgung der Steuereinrichtung und insbesondere eines Arbeitswerkzeugs, insbesondere eines Reinigungswerkzeugs, ausgebildet und im Gehäuse elektrisch verschaltet ist. Beispielsweise ist der Energiespeicher als Akkumulator mit mindestens einer Zelle, insbesondere einer Mehrzahl von Zellen, ausgebildet.

Das Arbeitsgerät weist mindestens ein Not- oder Sicherheitsbremssystem auf. Das Notbremssystem ist vorzugsweise zusätzlich zu einem Bremssystem oder einer Bremsfunktion für die übliche Reduzierung einer Geschwindigkeit im Betrieb vorgesehen. Üblicherweise wird eine Bremsfunktion bei autonomen Arbeitsgeräten über den Motor der Antriebseinheit oder die Motoren der Antriebseinheiten realisiert, indem jeder Motor bis zum Stillstand des Arbeitsgeräts zur Bewegung entgegen einer aktuellen Bewegungsrichtung angesteuert oder ausgeschaltet wird.

Das Notbremssystem ist von der Steuereinrichtung auslösbar, beispielsweise unter Verwendung von Informationen, also Daten, Signale oder Messwerte, eines Umgebungssensorsystems. Das Umgebungssensorsystem umfasst beispielsweise mindestens einen optischen Sensor, insbesondere zur Überwachung der Umgebung, und/oder mindestens einen Abstandssensor, mit dem insbesondere der Abstand zu einer Oberfläche der Bearbeitungsumgebung gemessen wird, um Gebäudekanten oder Treppen zu erkennen und ein Abstürzen zu verhindern.

Das Notbremssystem weist mindestens oder genau ein Bremselement auf. Das Bremselement ist derart ausgebildet und angeordnet, dass es nach einem Auslösen des Notbremssystems derart bewegt wird, dass es in formschlüssigen Eingriff mit mindestens einem sich im Betrieb des Arbeitsgeräts bewegenden Bauteils kommt. Durch den Formschluss zwischen dem Bremselement und dem sich bewegenden Bauteil wird das sich bewegende Bauteil an einer weiteren Bewegung gehindert, nämlich blockiert. Die Bremswirkung tritt durch das Blockieren des sich bewegenden Bauteils durch den Formschluss ein.

Jede Antriebseinheit weist vorzugsweise mindestens ein Bremselement auf. Wenn nachfolgend die Funktion von nur einem Bremselement beschrieben wird, erfolgt diese Beschreibung nur beispielhaft und stellvertretend für alle Antriebseinheiten bzw. Bremselemente des Notbremssystems.

Sofern zwei Antriebseinheiten an einem Arbeitsgerät vorgesehen sind, ist vorteilhaft vorgesehen, dass das Notbremssystem zwei Bremselemente, also ein Bremselement an jeder Antriebseinheit, aufweist. Es ist beispielsweise auch vorgesehen, dass jede Antriebseinheit mindestens zwei Bremselemente aufweist, die zum formschlüssigen Zusammenwirken mit einem sich im Betrieb des Arbeitsgerätes bewegenden Bauteils ausgebildet und angeordnet sind. Alternativ dazu ist auch vorgesehen, dass eine Antriebseinheit mindestens oder genau zwei Bremselemente aufweist, und dass jedes der beiden Bremselemente einer Antriebseinheit formschlüssig mit jeweils einem unterschiedlichen Bauteil zusammenwirkt, um eine Bremswirkung zu erzielen.

Bei Auslösen des Notbremssystems wird das Bremselement, das zuvor beispielsweise beabstandet zu dem sich bewegenden Bauteil der Antriebseinheit - in einer Freigabeposition - gehalten worden ist, in Richtung des sich bewegenden Bauteils bewegt - in eine Bremsposition -, so dass das Bremselement mit dem sich bewegenden Bauteil formschlüssig zusammenwirkt und die Bewegung des Bauteils stoppt oder blockiert. Bei dem sich bewegenden Bauteil handelt es sich beispielsweise um das Antriebsrad selbst, ein Zahnrad, das zwischen Antriebsrad und Motor angeordnet ist, eine Motorwelle des Motors, einen an der Motorwelle des Motors befestigter Bremskörper, oder ein sonstiges Bauteil, das sich bei einer Bewegung des Arbeitsgeräts bewegt oder zu der Bewegung des Arbeitsgerätes beiträgt. Besonders bevorzugt handelt es sich bei dem bewegten Bauteil um den Rotor eines Außenläufermotors oder einen an der Motorwelle des Motors befestigten Bremskörper, der von dem Bremselement bei Auslösen des Notbremssystems blockiert wird. Der Bremskörper ist beispielsweise an den Rotor angrenzend angeordnet.

Die Erfindung weist gegenüber dem Stand der Technik den Vorteil auf, dass das zusätzlich zum normalen Bremssystem bzw. zur normalen Bremsfunktion vorgesehene Notbremssystem im Falle eines erforderlichen Notstopps zur Verhinderung einer Schädigung in der Umgebung oder des Arbeitsgerätes den Bremsweg deutlich verkürzt. Die Erfindung weist ferner den Vorteil auf, dass die Bremswirkung nicht durch Reibung, sondern durch Formschluss erzeugt wird. Dadurch wird ein Verschleiß von Bremsflächen durch Reibung verhindert. Zudem ist die zur Bewegung des Bremselementes aufzubringende Kraft reduziert, da die Bremswirkung von der Anpresskraft unabhängig ist. Durch die durch den Formschluss erzeugte Blockierwirkung erfolgt ein unmittelbares Anhalten aller verbundenen Komponenten, einschließlich des Antriebsrades, so dass eine zuverlässige Notbremsung gewährleistet ist.

Gemäß einer ersten Ausgestaltung des Arbeitsgerätes ist vorgesehen, dass der Motor mindestens eine Motorwelle aufweist. An der Motorwelle ist mindestens ein Bremskörper derart angeordnet, dass er drehfest mit der Motorwelle verbunden ist. Der Bremskörper ist beispielsweise als Bremsring ausgebildet. Der Bremskörper weist, beispielsweise auf einem Außenumfang, eine Profilgeometrie auf. Die Profilgeometrie ist derart ausgebildet, dass sie ein formschlüssiges Zusammenwirken mit dem Bremselement ermöglicht, um eine Rotation des Bremskörpers um die Längsachse der Motorwelle und damit auch eine Rotation der Motorwelle zu blockieren. Das Bremselement ist vorteilhaft zum formschlüssigen Zusammenwirken mit der Profilgeometrie ausgebildet. Besonders vorteilhaft ist vorgesehen, dass die Profilgeometrie auf einem Außenumfang des Bremskörpers angeordnet ist, so dass das Bremselement insbesondere von außen an den Bremskörper heranbewegt werden kann. Über den Bremskörper wirkt das Bremselement folglich mittelbar mit der Motorwelle zusammen und blockiert eine Rotation der Motorwelle durch ein Blockieren des Bremskörpers, wodurch in der Wirkungskette der Antriebseinheit ebenfalls eine Rotation des Antriebsrades blockiert wird. Es ist auch vorgesehen, dass der Bremskörper mit dem Rotor des Motors verbunden ist, um dessen Rotation zu stoppen.

Vorzugsweise ist vorgesehen, dass der Motor als Außenläufermotor ausgebildet ist. Insbesondere überragt die Motorwelle eine Motorglocke des Motors, so dass auf das hervorstehende Ende der Motorwelle der Bremskörper montiert ist. Der Bremskörper ist vorzugsweise aus einem duktilen und mechanisch belastbaren Kunststoff gefertigt, um vorteilhaft bei schlagartiger Einwirkung des Bremselements nicht beschädigt zu werden. Insbesondere ist das Material des Bremselements derart gewählt, dass es den thermischen Belastungen durch den Motor standhält. Beispielsweise ist der Bremskörper aus Polycarbonat (PC), Polyamid (PA) oder kohlenstoffverstärktem Polypropylen (PP) ausgebildet.

Insbesondere um ein Blockieren der Rotation des Bremskörpers durch das Bremselement vorteilhaft sicherzustellen, ist gemäß einer weiteren Ausgestaltung vorgesehen, dass die Profilgeometrie mindestens einen Fangnocken aufweist. Der Fangnocken ist vorzugsweise auf einem Außenumfang des Bremskörpers angeordnet und steht in radialer Richtung aus einer Umfangsfläche hervor. Der Bremskörper rotiert vorteilhaft gemeinsam mit dem Rotor des Motors um die Längsachse der Motorwelle. Die radial - ausgehend von der Längsachse der Motorwelle - außenliegende Umfangsfläche des Bremskörpers ist der Umfang, auf dem der Fangnocken in radialer Richtung hervorsteht. Das Bremselement wird vorzugsweise in radialer Richtung translatorisch auf den Bremskörper zubewegt. Der Fangnocken weist insbesondere mindestens zwei Seitenflächen auf, die - in Abhängigkeit von der Rotationsrichtung des Bremskörpers - formschlüssig derart mit dem Bremselement zusammenwirken können, dass eine Rotation des Bremskörpers durch das Bremselement blockiert wird. Die Seitenflächen sind vorzugsweise im Wesentlichen quer zur Umfangsrichtung des Bremskörpers ausgerichtet.

Besonders bevorzugt ist vorgesehen, dass der Bremskörper auf seinem Umfang eine Mehrzahl von Fangnocken, beispielsweise mindestens oder genau zwei oder mindestens oder genau drei oder mindestens oder genau vier Fangnocken aufweist. Die Fangnocken sind vorzugsweise gleichmäßig auf einem Umfang des Bremskörpers verteilt angeordnet. Besonders bevorzugt sind drei Fangnocken vorgesehen.

Wird das Bremselement im Falle des Auslösens des Notbremssystems in Richtung des rotierenden Bremskörpers bewegt, trifft das Bremselement entweder auf den Fangnocken bzw. einen der Fangnocken oder auf die Umfangsfläche des Bremskörpers neben dem Fangnocken bzw. zwischen den Fangnocken. Wenn der Bremskörper stirnseitig auf den Fangnocken trifft, gleitet er zunächst auf dem Fangnocken ab und wirkt dann zumindest nach einer weiteren Umdrehung des Fangnockens formschlüssig mit mindestens einer Seitenfläche des Fangnockens zusammen, um den Bremskörper zu blockieren. Trifft das Bremselement auf die Umfangsfläche des Bremskörpers neben dem Fangnocken, gleitet das Bremselement zunächst an der Umfangsfläche entlang, bis der Fangnocken zum Bremselement rotiert ist und durch den im Umfangsrichtung eintretenden Formschluss eine Blockade des Bremskörpers erfolgt. Mit gesteigerter Anzahl von Fangnocken verkürzt sich die Zeit bis zum Blockieren des Bremskörpers, da, wenn ein Fangnocken verfehlt wird, ein Zusammenwirken mit dem nächsten Fangnocken auf dem Umfang erfolgt.

Für die Kraftübertragung zwischen Bremselement und Fangnocken hat sich insbesondere als vorteilhaft herausgestellt, wenn gemäß einer weiteren Ausgestaltung vorgesehen ist, dass an mindestens einem Fangnocken mindestens eine Fangtasche ausgebildet ist. Vorzugsweise ist vorgesehen, dass an mindestens einem Fangnocken mindestens zwei Fangtaschen ausgebildet sind. Die Fangtaschen sind vorzugsweise derart angeordnet, dass in Abhängigkeit von der Rotationsrichtung des Bremskörpers das Bremselement entweder mit der einen Fangtasche eines Fangnockens oder mit der anderen Fangtasche eines Fangnockens zusammenwirkt. Vorzugsweise ist eine Fangtasche derart ausgebildet, dass sie mindestens einen Hinterschnitt aufweist. Ein Hinterschnitt ist vorzugsweise als eine in Umfangsrichtung ausgerichtete Vertiefung in einer Seitenfläche eines Fangnockens ausgebildet.

Beispielsweise ist vorgesehen, dass zum Ausbilden einer Fangtasche mindestens eine Seitenfläche des Fangnockens mit einer angrenzenden Umfangsfläche des Bremskörpers einen Winkel von weniger als 90° einschließt. Das kann beispielsweise dadurch erreicht werden, dass jede Seitenfläche einer Fangtasche jeweils in einer gedachten Ebene liegt, die die Längsachse der Motorwelle beinhaltet, wobei die beiden Seitenflächen eines Fangnockens in unterschiedlichen Ebenen liegen. Zwischen den beiden gedachten Ebenen von zwei gegenüberliegenden Seitenflächen eines Fangnockens ist beispielsweise ein Winkel zwischen 15° und 30° ausgebildet.

Bevorzugt ist vorgesehen, dass mindestens eine Seitenfläche eines Fangnockens und eine Umfangsfläche des Bremskörpers einen Winkel zwischen 45° und 75° einschließen. Durch diesen steilen Anstellwinkel der Seitenfläche einer Fangtasche ist ein vorteilhafteres Zusammenwirken zwischen dem Bremselement und der Fangtasche gewährleistet und es wird insbesondere ein in radialer Richtung wirkender Hinterschnitt ausgebildet. Folglich sind die Seitenflächen eines Fangnockens nach innen angestellt, so dass der Fangnocken in Betrachtungsrichtung parallel zur Längsachse der Motorwelle an seinem distalen Ende breiter - insbesondere in Umfangsrichtung breiter - ausgebildet ist als an seinem proximalen Ende. Insbesondere ist jeder Fangnocken bei Betrachtung parallel zur Längsachse der Motorwelle symmetrisch, vorzugsweise spiegelsymmetrisch zu einer gedachten Ebene, die die Längsachse der Motorwelle beinhaltet, ausgebildet. Bevorzugt weist jeder Fangnocken in jeder seiner quer zur Umfangsrichtung ausgerichteten Seitenflächen eine Fangtasche auf.

Um vorteilhaft zu gewährleisten, dass ein in der Bremsposition befindliches Bremselement bei einer Rotation des Bremskörpers vorteilhaft in eine Fangtasche eines Fangnockens geleitet wird, ist gemäß einer weiteren Ausgestaltung des Arbeitsgerätes vorgesehen, dass an jede Fangtasche in Umfangsrichtung angrenzend mindestens eine Zuführschräge ausgebildet ist. In Umfangsrichtung an jede Fangtasche angrenzend ist die Umfangsfläche des Bremskörpers folglich nicht mit einem Radius gewölbt, sondern als Fläche, insbesondere als geneigte Fläche, ausgebildet. Insbesondere schließt jede Seitenfläche eines Fangnockens mit der zugehörigen Zuführschräge einen Winkel von weniger als 90° ein, insbesondere einen Winkel zwischen 45° und 75°. Zwischen einer Tangente an einem Hüllkreis des Bremskörpers an einer Stelle, an der die Zuführschräge beginnt, und einer Zuführschräge ist beispielsweise ein Winkel zwischen 15° und 45° ausgebildet.

Vorzugsweise ist vorgesehen, dass jede Fangtasche mindestens eine Zuführschräge aufweist, so dass unabhängig von der Drehrichtung der Motorwelle stets ein Zusammenwirken zwischen einem Bremselement und einer Zuführschräge bzw. einer Fangtasche erfolgen kann.

Gemäß einer weiteren Ausgestaltung des Arbeitsgerätes ist vorgesehen, dass das Bremselement mindestens einen keilförmigen Abschnitt, insbesondere zum Zusammenwirken mit mindestens einer Fangtasche, an dem Bremskörper aufweist. Der keilförmige Abschnitt ist vorzugsweise korrespondierend zur Form einer Fangtasche ausgebildet, so dass insbesondere die Innenkontur einer Fangtasche im Wesentlichen der Außenkontur des Bremselementes - zumindest in dem mit der Fangtasche zusammenwirkenden Bereich - entspricht. Die Fangtaschen stellen folglich eine Negativform des Bremselementes, zumindest im Bereich des keilförmigen Abschnitts, dar. Bei einer Rotation des Bremskörpers kann der keilförmige Abschnitt vorteilhaft in eine Fangtasche eines Fangnockens eingreifen, um den Bremskörper in seiner Rotation zu blockieren.

Vorzugsweise ist an jedem Bremselement mindestens ein zweiter keilförmiger Abschnitt vorgesehen, so dass bei jeder Rotationsrichtung des Bremskörpers stets ein Zusammenwirken des ersten keilförmigen Abschnitts oder des zweiten keilförmigen Abschnitts mit einer der Fangtaschen eines Fangnockens erfolgen kann.

Um vorteilhaft ein Einführen des Bremselementes in eine Fangtasche eines Fangnockens auf einfache Weise zu gewährleisten, ist gemäß einer weiteren Ausgestaltung des Arbeitsgerätes vorgesehen, dass das Bremselement zumindest um eine im Wesentlichen parallel zur Motorwelle verlaufende Achse Z verschwenkbar angeordnet ist. Das Bremselement wird vorzugsweise translatorisch in radialer Richtung auf den um die Längsachse der Motorwelle rotierenden Bremskörper zubewegt. Das Bremselement ist, beispielsweise an einem Tauchkolben, derart gehalten, dass es um die Achse Z verschwenkbar bzw. verkippbar ist. Dadurch kann sich das Bremselement, in Abhängigkeit von der Drehrichtung der Motorwelle, vorteilhaft an die Umfangsfläche des Bremskörpers anlegen, um beispielsweise mittels einer Zuführschräge in eine Fangtasche eingeführt zu werden. Sobald das Bremselement in die Fangtasche eingeführt ist, wird der Bremskörper abrupt gestoppt. In Abhängigkeit von der Drehrichtung des Bremskörpers wird das Bremselement dabei in die eine oder in die andere Richtung geneigt. Vorzugsweise sind Führungsmittel vorgesehen, die die Neigung des Bremselementes begrenzen.

Eine weitere Ausgestaltung des Arbeitsgerätes sieht vor, dass das Bremselement zwei gegenläufig zueinander geneigte Schrägflächen aufweist, und dass die Schrägflächen zum Kontaktieren des Bremskörpers ausgerichtet sind. Die beiden gegenläufig zueinander geneigten Schrägflächen bilden vorzugsweise die Kontaktflächen des Bremselementes zur Umfangsfläche des Bremskörpers. Wird das Bremselement in seine Bremsposition am Bremskörper bewegt, legt sich in Abhängigkeit von der Rotationsrichtung des Bremskörpers entweder die eine oder die andere Schrägfläche vorteilhaft an eine Zuführschräge des Bremskörpers an, so dass das Bremselement in eine Fangtasche geleitet wird. Die Schrägflächen des Bremselementes sind vorzugsweise so zueinander angeordnet, dass, sobald eine Schrägfläche auf dem Umfang des Bremskörpers an den Beginn einer Zuführschräge gelangt, der Bremskörper derart verkippt, dass die Schrägfläche auf der Zuführschräge geführt wird. Als besonders vorteilhaft hat sich herausgestellt, wenn zwischen den beiden Schrägflächen ein Winkel zwischen etwa 100° und 130°, insbesondere von 120°, ausgebildet ist.

Um das Zusammenwirken jeweils einer Schrägfläche mit einer Zuführschräge zu gewährleisten, hat sich gemäß einer weiteren Ausgestaltung als vorteilhaft herausgestellt, wenn zwischen den beiden Schrägflächen, insbesondere an der Kontaktlinie zwischen den beiden Schrägflächen, mindestens ein Führungsvorsprung ausgebildet ist. Beispielsweise weist der Führungsvorsprung einen halbkreisförmigen Querschnitt auf, so dass das Bremselement zu Beginn einer Zuführschräge stets mit seiner Schrägfläche in Richtung der Zuführschräge verkippt.

Beispielsweise ist das Bremselement bei Betrachtung in einer Richtung parallel zur Längsachse der Motorwelle zumindest in dem Bereich, der mit dem Bremskörper zusammenwirkt, spiegelsymmetrisch ausgebildet. Dadurch ist gewährleistet, dass das Bremselement unabhängig von der Drehrichtung des Bremskörpers stets mit einem vorteilhaft ebenfalls spiegelsymmetrisch ausgebildeten Fangnocken zusammenwirken kann.

Vorzugsweise ist gemäß einer weiteren Ausgestaltung des Arbeitsgerätes vorgesehen, dass der Motor bzw. jeder Motor jeder Antriebseinheit als Außenläufer mit einem außenliegenden Rotor ausgebildet ist. Der Rotor weist eine Profilgeometrie auf und das Bremselement ist derart angeordnet und ausgebildet, dass es formschlüssig mit der Profilgeometrie zusammenwirken kann, um eine Rotation des Bremskörpers zu stoppen und zu blockieren. Nach Auslösen des Notbremssystems liegt das Bremselement an der Profilgeometrie des Rotors an, wodurch der außenliegende Rotor des Motors mit dem Bremselement gestoppt wird. Da der Rotor des Motors zumindest mittelbar mit dem Antriebsrad verbunden ist, wird auch dessen Bewegung gestoppt. Beispielsweise ist die Profilgeometrie an dem Rotor derart ausgebildet, dass der Rotor mit einem beschriebenen Bremselement unmittelbar verbunden ist.

Gemäß einer weiteren Ausgestaltung des Arbeitsgerätes ist vorgesehen, dass die Antriebseinheit mindestens ein Getriebe aufweist, und dass das Bremselement zum formschlüssigen Zusammenwirken mit mindestens einem rotierenden Bauteil des Getriebes ausgebildet und angeordnet ist. Beispielsweise ist das Bremselement zum formschlüssigen Zusammenwirken mit mindestens einem rotierenden Zahnrad des Getriebes ausgebildet, indem das Bremselement in Zähne des Zahnrades eingreift, um das Zahnrad zu blockieren. Jede Antriebseinheit weist vorzugsweise mindestens ein Getriebe auf, das zwischen Motor und Antriebsrad angeordnet ist. Mit dem Getriebe ist die Bewegung des Motors auf das Antriebsrad übertragbar. Jede Antriebseinheit weist vorzugsweise mindestens ein Bremselement am Getriebe auf. Wird das Getriebe blockiert, ist auch gleichzeitig das Antriebsrad blockiert, wodurch ein Notstopp des Arbeitsgerätes gewährleistet ist.

Eine weitere Ausgestaltung des Arbeitsgerätes sieht vor, dass das Bremselement zum formschlüssigen Zusammenwirken mit mindestens einem Antriebsrad ausgebildet und angeordnet ist. Das Bremselement ist beispielsweise dazu ausgebildet, mit einem Profil auf der Lauffläche des Antriebsrades formschlüssig zusammenzuwirken, um die Rotation des Antriebsrades zu blockieren. Das Bremselement ist vorzugsweise in der Antriebseinheit translatorisch oder schwenkbar auf das Antriebsrad zubewegbar gehalten. Es ist auch vorgesehen, dass das Bremselement parallel zur Rotationsachse eines Antriebsrades zwischen Speichen des Antriebsrades eingeführt wird, um einen Formschluss zu bewirken und das Antriebsrad zu blockieren.

Es ist beispielsweise auch vorgesehen, dass eine Antriebseinheit mindestens oder genau zwei Bremselemente aufweist, und dass eines der beiden Bremselemente zum formschlüssigen Zusammenwirken mit einem Bremskörper an der Motorwelle und gleichzeitig das andere Bremselement zum formschlüssigen Zusammenwirken mit einem rotierenden Bauteil des Getriebes oder mit dem Antriebsrad angeordnet ist. Dadurch, dass bei dieser Weiterbildung zwei Bremselemente gleichzeitig auf sich bewegende Teile der Antriebseinheit wirken, kann die Bremsfunktion gesteigert werden.

Insbesondere um das Notbremssystem als ausfallsicheres System zu gestalten, ist gemäß einer weiteren Ausgestaltung des Arbeitsgeräts vorgesehen, dass die Antriebseinheit mindestens ein Spannmittel aufweist. Das Spannmittel ist derart angeordnet und ausgebildet, dass es eine Kraft auf das Bremselement bewirkt, die das Bremselement in eine Bremsposition drängt. Zusätzlich ist mindestens ein Freigabemittel vorgesehen. Das Freigabemittel ist dazu ausgebildet, das Bremselement entgegen der Kraft des Spannmittels aktiv in eine Freigabeposition zu bewegen und insbesondere dort zu halten.

Diese Ausgestaltung hat gegenüber dem Stand der Technik den Vorteil, dass das Notbremssystem dadurch ein "fail-safe-design" aufweist. Es ist keine durch einen Aktor verursachte Bewegung des Bremselementes in Richtung des zu stoppenden Bauteils, beispielsweise des Bremskörpers, des Rotors des Motors oder eines Zahnrades des Getriebes, erforderlich, sondern das Bremselement wird stets in Richtung der Bremsposition gedrängt. Weist der Energiespeicher des Arbeitsgeräts beispielsweise keine Spannung mehr auf, um das Freigabemittel zu betätigen, wird das Bremselement von dem Spannmittel automatisch in seine Bremsposition gedrängt, so dass eine Bewegung des Arbeitsgerätes verhindert wird. Vorzugsweise ist das Notbremssystem im ausgeschalteten Zustand des Arbeitsgeräts daher stets ausgelöst. Das Notbremssystem wird folglich ausgelöst, indem das Freigabemittel keine Kraft mehr entgegen der Kraft des Spannmittels bewirkt. Das Notbremssystem wird freigegeben bzw. deaktiviert, indem - und insbesondere solange - das Freigabemittel eine der Kraft des Spannmittels entgegenwirkende Kraft bewirkt.

Bei dem Spannmittel handelt es sich beispielsweise um eine Feder, insbesondere um eine Spiral-, Schenkel- oder Tellerfeder, die derart angeordnet ist, dass sie mittelbar oder unmittelbar eine Kraft in Richtung der Bremsposition auf das Bremselement bewirkt. Alternativ dazu ist vorgesehen, dass das Spannmittel als pneumatisches Spannsystem, insbesondere mit mindestens einer Druckkammer, ausgebildet ist.

Das Freigabemittel ist vorzugsweise als elektrischer, hydraulischer oder pneumatischer Aktor ausgebildet. Der Aktor hält das Bremselement im normalen Betrieb entgegen einer Kraft des Spannmittels in einer Freigabeposition. Sobald der Aktor derart angesteuert wird, dass das Aufbringen der Freigabekraft unterbleibt oder die Freigabekraft verringert wird, drängt das Spannmittel das Bremselement automatisch in seine Bremsposition an das sich bewegende Bauteil. Besonders bevorzugt ist vorgesehen, dass das Freigabemittel als elektrischer Aktor ausgebildet ist. Reicht beispielsweise eine Spannung des Akkus des Arbeitsgerätes nicht mehr aus, um mittels des Aktors eine - ausreichend große - Freigabekraft auf das Spannmittel zu bewirken, wird automatisch das Notbremssystem ausgelöst, indem das Bremselement auf das sich bewegende Bauteil zubewegt wird. Dadurch ist sichergestellt, dass auch bei einem unbeabsichtigten Spannungsabfall stets das Notbremssystem ausgelöst wird.

Dadurch, dass ein Formschluss zwischen dem Bremselement und dem zu stoppenden Bauteil erzeugt wird, wodurch eine Blockierwirkung entsteht, muss die Kraft des Spannmittels nur ausreichend sein, um das Bremselement in seine Bremsposition zu bewegen. Die eigentliche Bremswirkung ist von der Kraft des Spannmittels unabhängig. Dadurch kann auch das Spannmittel und damit auch das Freigabemittel kleiner dimensioniert werden. Insbesondere bei elektrischen Aktoren als Freigabemittel wirkt sich das vorteilhaft durch eine Reduzierung der Wärmeleistung einer Aktorspule und einen reduzierten Energiebedarf aus.

Eine beispielhafte Ausgestaltung sieht vor, dass der Aktor mindestens eine Zylinderspule und mindestens einen Tauchkolben aufweist. Der Tauchkolben ist innerhalb der Zylinderspule gehalten und kann von der Zylinderspule translatorisch entlang seiner Längsachse bewegt werden. Das Bremselement ist mit dem Tauchkolben gekoppelt und ist mittels einer Bewegung des Tauchkolbens innerhalb der Zylinderspule in eine Freigabeposition verbringbar. Vorzugsweise ist der Tauchkolben von einem als Feder ausgebildeten Spannmittel umgeben oder in dem Tauchkolben ist eine Feder angeordnet. Die Feder drängt den Tauchkolben aus der Zylinderspule heraus und damit das Bremselement stets in eine Bremsposition, insbesondere an einen Bremskörper an der Motorwelle.

Wird der elektrische Aktor mit einer Spannung beaufschlagt, wird der Tauchkolben in die Zylinderspule hineinbewegt, wodurch das Bremselement in seine Freigabeposition entgegen der Federkraft bewegt wird. Während des normalen Betriebs des Arbeitsgerätes wird das Bremselement von dem Aktor aktiv in seiner Freigabeposition gehalten. Entsteht eine sicherheitsrelevante Situation, bewirkt die Steuereinrichtung beispielsweise ein Unterbrechen der Spannungsversorgung des elektrischen Aktors, wodurch die Feder das Bremselement in seine Bremsposition drängt und das Arbeitsgerät angehalten wird.

Der elektrische Aktor ist vorzugsweise derart ausgebildet, dass er unmittelbar mit der Spannung des Energiespeichers des Arbeitsgerätes, insbesondere eines Akkus, betreibbar ist. Dadurch, dass vorzugsweise nur die Kraft des Spannmittels, insbesondere einer Feder, mit dem elektrischen Aktor überwunden werden muss, kann der Aktor auch mit einer geringen Batteriespannung von nur etwa 10 Volt betrieben werden, wobei gleichzeitig ein zuverlässiger Betrieb des Aktors sichergestellt ist. Bei einer Nominalspannung von etwa 14 Volt ist es üblich, dass die tatsächliche Spannung etwa zwischen 11 Volt und 17 Volt schwankt. Es muss folglich sichergestellt werden, dass der Aktor bei der geringsten Spannung noch eine ausreichende Freigabekraft erzeugt und bei der höchsten Spannung nicht überhitzt. Durch die nur geringe erforderliche Kraft, die mit dem Aktor erzeugt werden muss, insbesondere weil das Spannmittel klein dimensioniert ist und nur eine geringe Kraft durch das Freigabemittel aufgebracht werden muss, kann auf einen Gleichspannungswandler verzichtet werden, wodurch sowohl der Energieverbrauch als auch das Gewicht weiter reduziert werden können.

Gemäß einer alternativen Ausgestaltung des Arbeitsgerätes ist vorgesehen, dass das Bremselement durch einen Aktor in eine Bremsposition bewegbar ist. Bei Auslösen des Notbremssystems durch die Steuereinrichtung bewirkt der Aktor, dass das Bremselement auf das sich bewegende Bauteil der Antriebseinheit zubewegt wird, um dessen Bewegung zu stoppen. Der Aktor ist beispielsweise elektrisch, hydraulisch oder pneumatisch betätigbar. Beispielsweise ist mindestens eine Druckluftkammer oder eine Druckluftpatrone vorgesehen, die verwendet wird, um das Bremselement in die Bremsposition zu bewegen.

Bevorzugt ist gemäß einer weiteren Ausgestaltung vorgesehen, dass das Bremselement radial oder tangential translatorisch auf das rotierende Bauteil zubewegbar ist. Vorzugsweise ist vorgesehen, dass das Bremselement im Wesentlichen in radialer Richtung auf den außenliegenden Rotor des Motors oder den Bremskörper zubewegbar ist, um den Formschluss zu erzeugen und das Bauteil zu stoppen bzw. zu blockieren.

Alternativ dazu ist vorgesehen, dass das Bremselement in Richtung des rotierenden Bauteils verschwenkbar ist, beispielsweise an einem schwenkbaren Arm. Im Vergleich zu den anderen Ausgestaltungen weist diese Ausgestaltung einen größeren Platzbedarf für das Verschwenken des Armes auf.

Damit das Notbremssystem in betriebskritischen Situationen ausgelöst werden kann, muss die Steuereinrichtung derartige Situationen identifizieren können. Dazu weist das Arbeitsgerät gemäß einer weiteren Ausgestaltung mindestens ein Umgebungssensorsystem auf. Die Steuereinrichtung ist dazu eingerichtet, unter Verwendung von Informationen, z. B. mindestens einem Messwert, mindestens einem Signal oder Daten, des Umgebungssensorsystems das Notbremssystem auszulösen, wenn die Informationen auf eine betriebskritische Situation, beispielsweise eine Schädigung der Umgebung oder des Arbeitsgeräts, hinweisen.

Das Umgebungssensorsystem weist mindestens einen Sensor, vorzugsweise eine Mehrzahl von Sensoren auf, mit dem/denen die Umgebung des Arbeitsgerätes überwachbar ist. Beispielsweise umfasst das Umgebungssensorsystem mindestens einen optischen Sensor und/oder mindestens einen akustischen Sensor und/oder mindestens einen elektromagnetischen Sensor.

Die Steuereinheit verarbeitet beispielsweise Informationen des Umgebungssensorsystems und kann anhand der Überschreitung von Schwellenwerten und/oder einem Profil von Kriterien vordefinierter Situationen eine kritische Betriebssituation identifizieren, die das Auslösen des Notbremssystems erforderlich macht. Beispielsweise ist vorgesehen, dass die Steuereinheit dazu ausgebildet ist, nach dem Erkennen einer kritischen Betriebssituation zunächst einen normalen Bremsvorgang, beispielsweise mittels der Motoren der Antriebseinheiten, einzuleiten. Nach einem vorbestimmten Zeitablauf nach Beginn des Bremsvorgangs wird beispielsweise auf Basis von Bewegungsdaten, z. B. aktueller Geschwindigkeit und Bewegungsrichtung, und/oder Gerätedaten, z. B. Form des Gehäuses, Gewicht, Lage des Schwerpunktes, bestimmt, ob ein Schadensereignis mit dem Bremsvorgang verhindert werden kann. Ermittelt die Steuereinheit, dass ein Schadensereignis mit dem Bremsvorgang nicht verhindert werden kann, wird das Notbremssystem ausgelöst.

Beispielsweise weist das Umgebungssensorsystem mindestens einen Abstandssensor, z. B. zum Ermitteln eines Abstandes zu einer Oberfläche der Bearbeitungsumgebung, und/oder mindestens einen optischen Umgebungssensor auf. Insbesondere ist der Umgebungssensor derart ausgebildet, dass er den Abstand des Arbeitsgerätes in alle Richtungen, zumindest in einer Ebene überwacht. Erkennt die Steuereinrichtung auf Basis von Informationen des Umgebungssensorsystems, dass eine vorbestimmte, kritische Betriebssituation vorliegt, die eine Notbremsung erforderlich macht, oder dass ohne Notbremsung eine Kollision des Arbeitsgerätes mit einem Gegenstand oder ein Absturz des Arbeitsgerätes unvermeidbar ist, so löst die Steuereinrichtung das Notbremssystem aus.

Eine weitere Ausgestaltung des Arbeitsgeräts sieht vor, dass die Steuereinrichtung dazu eingerichtet und ausgebildet ist, um nach einem Notbremsvorgang eine Freigabe des Notbremssystems zu bewirken. Das Steuergerät ist dazu eingerichtet, die Antriebseinheit derart anzusteuern, dass zunächst eine Drehbewegung des blockierten Bauteils in eine Drehrichtung bewirkt wird, die der Drehrichtung vor Auslösen des Notbremssystems entgegengesetzt ist. Insbesondere bei Ausführungsbeispielen, in denen das Bremselement nach der Notbremsung in einer Fangtasche an einem Fangnocken angeordnet ist, kann das Bremselement nicht ohne Weiteres in radialer Richtung von dem Bremskörper wegbewegt werden, da der Hinterschnitt die Bewegung blockiert. Daher muss zunächst eine Drehbewegung des Bremskörpers in einer zur ursprünglichen Drehrichtung entgegengesetzten Richtung durchgeführt werden, um das Bremselement in Umfangsrichtung aus dem Eingriff der Fangtasche freizugeben. Anschließend kann das Bremselement, beispielsweise mit einem Freigabemittel, in die Freigabeposition bewegt werden.

Die Betriebssicherheit des Arbeitsgerätes lässt sich vorzugsweise gemäß einer letzten Ausgestaltung dadurch steigern, dass das Notbremssystem derart ausgebildet ist, dass es im ausgeschalteten Zustand des Arbeitsgerätes ausgelöst ist, also sich das Bremselement in einer Bremsposition befindet bzw. die Bremselemente in einer Bremsposition befinden. Ferner ist vorgesehen, dass das Notbremssystem nach dem Einschalten bzw. Aktivieren des Arbeitsgerätes freigegeben bzw. deaktiviert wird, nämlich das Bremselement in seine Freigabeposition bewegt wird. Das erfolgt insbesondere dann, wenn nach dem Einschalten von der Steuereinrichtung nach einer initialen Prüfung keine eine Notbremsung erforderlich machenden Kriterien unter Verwendung des Umgebungssensorsystems erkannt werden.

Das Notbremssystem ist insbesondere derart ausgebildet, dass auf das Bremselement bzw. die Bremselemente des Notbremssystems stets eine Kraft bewirkt werden muss, die das Bremselement bzw. die Bremselemente in einer Freigabeposition hält/halten, um eine Bewegung des Arbeitsgerätes zu ermöglichen. Vorzugsweise weist das Notbremssystem dazu - wie vorstehend beschrieben - für jedes Bremselement mindestens ein Spannmittel, z. B. in Form einer Feder, auf, das das Bremselement auch ohne Energieversorgung in seine Bremsposition drängt. Nach dem Einschalten bzw. Aktivieren des Arbeitsgerätes sorgt ein Freigabemittel, z. B ein elektrischer Aktor, dafür, dass das Bremselement in seine Freigabeposition bewegt wird. Auf diese Weise wird das Arbeitsgerät sicher gebremst, ohne dass der Energiebedarf gesteigert ist.

Um im Rahmen einer Notbremsung insbesondere auch eine Richtungsänderung des Arbeitsgeräts bewirken zu können, ist gemäß einer weiteren Ausgestaltung des Arbeitsgeräts vorgesehen, dass die Steuereinrichtung zum selektiven Auslösen des Notbremssystems ausgebildet ist. Das selektive Auslösen des Notbremssystems umfasst beispielsweise das Bewegen mindestens eines oder mehrerer ausgewählter Bremselemente. Dieses Ausführungsbeispiel ist insbesondere für Arbeitsgeräte mit mindestens zwei Antriebseinheiten, also mindestens zwei Bremselementen vorgesehen.

Erkennt die Steuereinrichtung, dass ein Schadensereignis in einer kritischen Betriebssituation vorteilhaft auch durch eine abrupte Richtungsänderung oder Drehung des Arbeitsgerätes verhindert werden kann, wird das Notbremssystem nur selektiv ausgelöst, also beispielsweise bei insgesamt zwei vorhandenen Bremselementen nur eines in seine Bremsposition verbracht. Dazu wird beispielsweise die Spannungsversorgung von nur einem Freigabemittel unterbrochen, so dass das Spannmittel das jeweilige Bremselement in eine Bremsposition verbringt. Dadurch, dass bei einem selektiven Auslösen des Notbremssystems nur ein Antriebsrad blockiert wird, erfolgt zusätzlich zur Notbremsung auch eine abrupte Richtungsänderung bzw. Drehung des Arbeitsgerätes, die zur Verhinderung eines Schadensereignisses beitragen kann.

Gemäß einem nicht beanspruchten Ausführungsbeispiel wird eine Antriebseinheit für ein Arbeitsgerät beschrieben, insbesondere nach einem der vorstehend beschriebenen Ausführungsbeispiele, wobei die Antriebseinheit nach einem der beschriebenen Ausführungsbeispiele ausgebildet ist. Die Antriebseinheit weist beispielsweise mindestens einen Motor und mindestens ein Antriebsrad auf und zeichnet sich dadurch aus, dass mindestens ein Bremselement vorhanden ist, wobei das Bremselement zum formschlüssigen Zusammenwirken mit einem sich im Betrieb des Arbeitsgeräts bewegenden Bauteils der Antriebseinheit ausgebildet und angeordnet ist. Vorzugsweise weist die Antriebseinheit mindestens ein Spannmittel und ein Freigabemittel auf.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines als Reinigungsgerät ausgebildeten Arbeitsgerätes in einer perspektivischen Ansicht,
- Fig. 2: ein erstes Ausführungsbeispiel einer Antriebseinheit für ein Arbeitsgerät in Seitenansicht
- Fig. 3: das Ausführungsbeispiel gemäß Fig. 2 in einer perspektivischen Teilansicht,
- Fig. 4: ein zweites Ausführungsbeispiel einer Antriebseinheit für ein Arbeitsgerät, und
- Fig. 5: ein drittes Ausführungsbeispiel einer Antriebseinheit für ein Arbeitsgerät.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

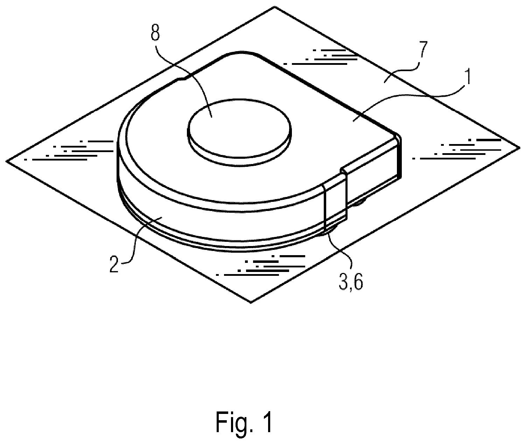

Fig. 1 zeigt ein Ausführungsbeispiel eines Arbeitsgerätes 1 in perspektivischer Seitenansicht. Das Arbeitsgerät 1 weist ein Gehäuse 2, zwei an der Unterseite des Gehäuses 2 angeordnete Antriebseinheiten 3 und mindestens eine in dem Gehäuse 2 angeordnete Steuereinrichtung auf. Das Arbeitsgerät 1 ist als Reinigungsgerät, nämlich als Saugroboter ausgebildet.

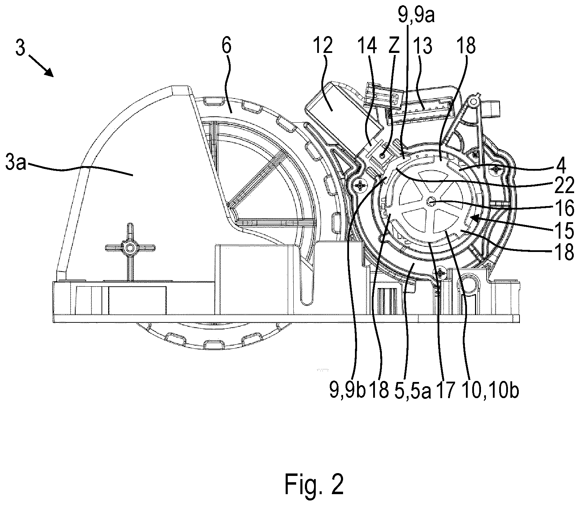

Ausführungsbeispiele für die Antriebseinheiten 3 für das Arbeitsgerät 1 sind in den Fig. 2 bis Fig. 5 dargestellt. Jede Antriebseinheit 3 weist einen Motor 4, ein Getriebe 5 und ein Antriebsrad 6 auf. Der Motor 4 ist als bürstenloser Gleichstrommotor ausgebildet. Der Motor 4, das Getriebe 5 und das Antriebsrad 6 sind an einem gemeinsamen Rahmen 3a gehalten. Das Getriebe 5 weist ein Getriebegehäuse 5a auf.

Das Arbeitsgerät 1 gemäß Fig. 1 ist dazu ausgebildet und eingerichtet, sich in einer Bearbeitungsumgebung 7 autonom fortzubewegen und Arbeitsaufgaben, hier eine Reinigung der Bearbeitungsumgebung 7, auszuführen. Ein Arbeitswerkzeug ist bei diesem Ausführungsbeispiel ein Saugmotor mit einer Filtereinheit und einer Sauggutkammer zur Aufnahme von Sauggut.

Das Arbeitsgerät 1 verfügt über ein Umgebungssensorsystem 8, das eine Mehrzahl von Sensoren aufweist, mit denen die Umgebung des Arbeitsgerätes 1 zumindest in der Ebene des Umgebungssensorsystems 8 überwachbar ist. Die Überwachung der Umgebung des Arbeitsgerätes 1 ermöglicht der Steuereinheit ein automatisches Navigieren des Arbeitsgeräts 1 in der Bearbeitungsumgebung 7.

Fig. 2 zeigt ein erstes Ausführungsbeispiel einer Antriebseinheit 3, beispielsweise für ein Arbeitsgerät 1 gemäß Fig. 1, in einer Seitenansicht. Das Arbeitsgerät 1 gemäß Fig. 1 weist ein Notbremssystem auf. Als Teil des Notbremssystems weist jede Antriebseinheit 3 ein Bremselement 9 auf. Das Notbremssystem ist von der Steuereinrichtung steuerbar, also auslösbar und freigebbar. Das Auslösen des Notbremssystems führt dazu, dass das Bremselement 9 bzw. alle Bremselemente 9 des Arbeitsgeräts 1 jeweils formschlüssig mit einem sich im Betrieb des Arbeitsgeräts 1 bewegenden Bauteils 10 zusammenwirken, um eine Bewegung des Arbeitsgerätes 1 schnellstmöglich zu stoppen (siehe Fig. 2 bis 5).

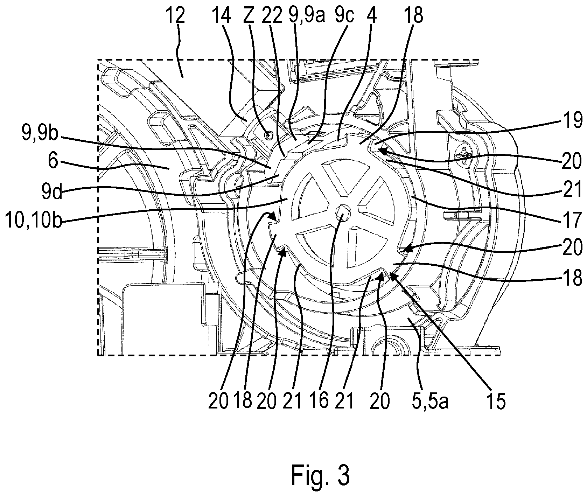

Fig. 3 zeigt das Ausführungsbeispiel gemäß Fig.2 in einer perspektivischen Detailansicht. Gemäß Fig. 2 und Fig. 3 ist ein Antriebsrad 6 rotierbar in dem Rahmen 3a der Antriebseinheit 3 gehalten. Das Antriebsrad 6 wird über ein Getriebe 5 von einem Motor 4 angetrieben, an dessen Motorwelle 16 ein Bremskörper 10b als zu bremsendes bzw. zu stoppendes Bauteil 10 bewegt wird. Der Bremskörper 10b ist derart mit der Motorwelle 16 verbunden, dass durch ein Stoppen einer Rotation des Bremskörpers 10b ebenfalls die Motorwelle 16 blockiert, nämlich ebenfalls an einer Rotation gehindert wird. Der Bremskörper 10b ist hier als Bremsring ausgebildet.

Der Bremskörper 10b ist vorzugsweise derart angeordnet, dass er in axialer Richtung auf der Motorwelle 16 an den Rotor des Motors 4 angrenzt. Der Bremskörper 10b rotiert im Betrieb des Arbeitsgeräts 1 mit der gleichen Drehzahl wie die Motorwelle 16. An dem Rahmen 3a ist ein Bremselement 9 angeordnet, das gemäß Fig. 2 und 3 in seiner Freigabeposition dargestellt ist. Mit dem Bremselement 9 ist in einer Bremsposition des Bremselementes 9 eine Bewegung des Bremskörpers 10b und damit eine Bewegung der Motorwelle 16 blockierbar. Dazu wird das Bremselement 9 auf eine Umfangsfläche 17 des Bremskörpers 10b zubewegt. Die Profilgeometrie 15 des Bremskörpers 10b ist zum formschlüssigen Zusammenwirken mit dem Bremselement 9 ausgebildet. Die Profilgeometrie 15 des Bremskörpers 10b weist bei diesem Ausführungsbeispiel drei Fangnocken 18 auf, von denen jeder zum formschlüssigen Zusammenwirken mit dem Bremselement 9 zum Blockieren der Rotation des Bremskörpers 10b ausgebildet ist.

In Abhängigkeit von der aktuellen Ausrichtung des rotierenden Bremskörpers 10b trifft das Bremselement 9 beim Bewegen in seine Bremsposition entweder stirnseitig auf einen der drei Fangnocken 18 oder auf die Umfangsfläche 17 zwischen den Fangnocken 18. Die Fangnocken 18 sind gleichmäßig verteilt über den Umfang des Bremskörpers 10b angeordnet und stehen aus der Umfangsfläche 17 hervor. Dabei ist das Hervorstehen nicht auf eine gedachte Hüllkurve bezogen, sondern auf die tatsächliche Umfangsfläche 17 des Bremskörpers 10b.

Die quer zur Umfangsrichtung ausgerichteten Seitenflächen 19 der Fangnocken 18 sind zur Umfangsfläche 17 des Bremskörpers 10b so angeordnet, dass sie mit der Umfangsfläche 17 einen Winkel von weniger als 90° einschließen, so dass zwischen der Umfangsfläche 17 und einer Seitenfläche 19 eines Fangnockens 18 durch den dadurch ausgebildeten Hinterschnitt eine Fangtasche 20 ausgebildet wird. Eine Fangtasche 20 wirkt im Falle einer Notbremsung - in Abhängigkeit von der Drehrichtung des Bremskörpers 10b - formschlüssig mit einem keilförmigen ersten Abschnitt 9a oder mit einem keilförmigen zweiten Abschnitt 9b des Bremselementes 9 zusammen.

Vorteilhaft entspricht die Außenkontur des ersten Abschnitts 9a und des zweiten Abschnitts 9b des Bremselements 9 im Wesentlichen der Innenkontur einer Fangtasche 20. Das Bremselement 9 ist um eine Achse Z, die parallel zur Längsachse der Motorwelle 16 angeordnet ist, verkippbar, so dass sich das Bremselement 9, sobald es in seine Bremsposition gedrängt wird, mit Zuführschrägen 21 zusammenwirken kann, die an jede Fangtasche 20 in Umfangsrichtung angrenzend ausgebildet sind. Die Zuführschrägen 21 sind derart geneigt, dass sie das Bremselement 9 in die zugehörige Fangtasche 20 leiten.

Zum vorteilhaften Zusammenwirken mit den Zuführschrägen 21 weist das Bremselement 9 zwei zueinander geneigte Schrägflächen 9c und 9d auf, die bei diesem Ausführungsbeispiel etwa um einen Winkel von 120° zueinander geneigt sind. In der Bremsposition wirkt in Abhängigkeit von der Drehrichtung des Bremskörpers 10b entweder die erste Schrägfläche 9c oder die zweite Schrägfläche 9d mit einer Zuführschräge 21 zusammen. Um durch Verkippen des Bremselementes 9 ein zuverlässiges Einführen in eine Fangtasche 20 zu gewährleisten, ist zwischen den Schrägflächen 9c, 9d ein Führungsvorsprung 22 vorgesehen, der bei diesem Ausführungsbeispiel einen etwa halbkreisförmigen Querschnitt aufweist. Der Führungsvorsprung 22 sorgt dafür, dass die jeweilige Schrägfläche 9c, 9d auf eine Zuführschräge 21 verkippt, insbesondere wenn der Führungsvorsprung 22 an den Beginn der Zuführschräge 21 gelangt.

Das Bremselement 9 ist an einem Tauchkolben 14 gehalten. Innerhalb des Tauchkolbens 14 ist ein in Fig. 2 und Fig. 3 nicht dargestelltes Spannmittel 11 in Form eine Feder gehalten, das den Tauchkolben aus dem Freigabemittel 12 - hier in Form eines elektrischen Aktors - bewegt und damit das Bremselement 9 in seine Bremsposition drängt. Dazu ist das Bremselement 9 zusammen mit dem Tauchkolben 14 und dem Freigabemittel 12 am Rahmen 3a der Antriebseinheit 3 gehalten. Mit dem Freigabemittel 12 ist das Bremselement 9 entgegen der Kraft des Spannmittels 11 in eine Freigabeposition bewegbar. Das Freigabemittel 12 weist mindestens eine Zylinderspule auf, in der der Tauchkolben 14 geführt ist.

Wird das Freigabemittel 12 von der Steuereinrichtung, beispielsweise nach dem Einschalten des Arbeitsgeräts 1 und für die Dauer des normalen Betriebs, betätigt, wird der Tauchkolben 14 von der Zylinderspule translatorisch entlang seiner Längsachse bewegt, so dass sich auch das Bremselement 9 bewegt und eine Rotation des Bremskörpers 10b freigibt. Wird das Notbremssystem ausgelöst, wird beispielsweise die Spannungsversorgung des Freigabemittels 12 unterbrochen und die Kraft des Spannmittels 11 bewirkt ein Bewegen des Bremselements 9 in die Bremsposition und damit ein formschlüssiges Zusammenwirken mit einem Fangnocken 18 des Bremskörpers 10b.

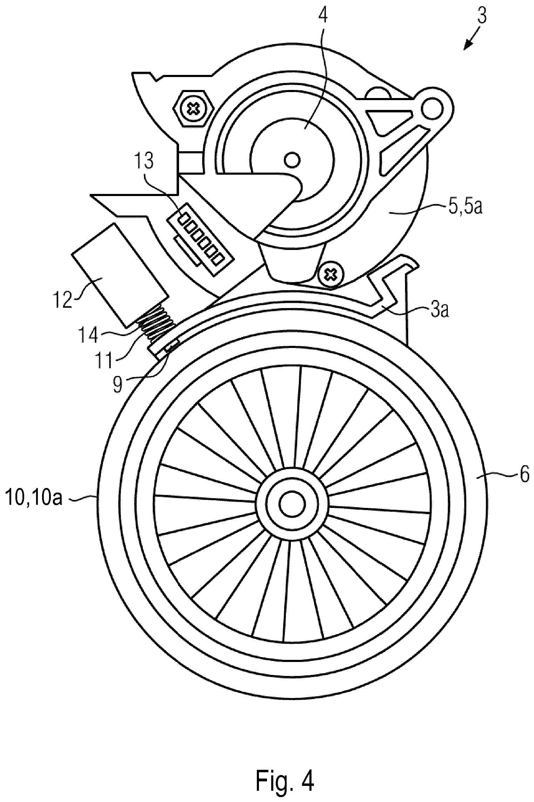

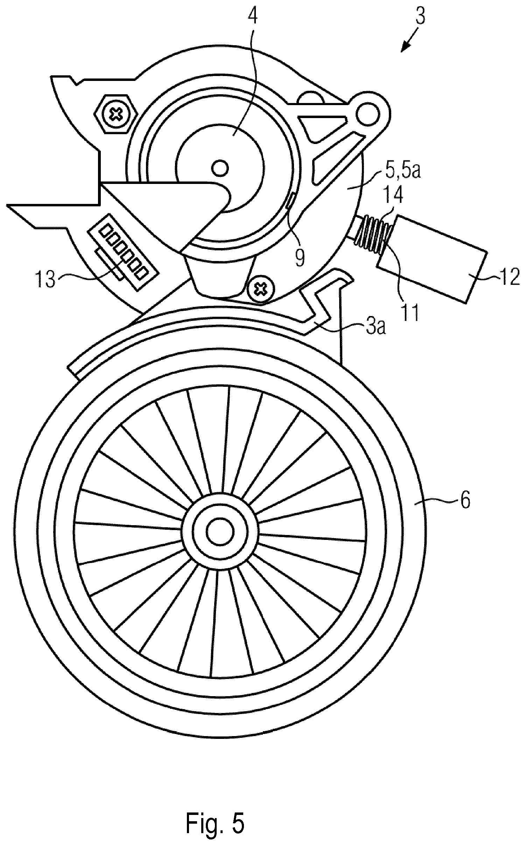

Die Antriebseinheiten 3 der Fig. 4 und 5 sind im Wesentlichen übereinstimmend wie die vorstehend beschriebene Antriebseinheit 3 gemäß Fig. 2 und Fig. 3 aufgebaut, so dass für die Fig. 4 und Fig. 5 auf die vorstehende Beschreibung verwiesen wird. Der einzige Unterschied zwischen den Ausführungsbeispielen ist die räumliche Zuordnung des Bremselements 9 zu unterschiedlichen Bauteilen 10, mit denen das Bremselement 9 des Notbremssystems formschlüssig zusammenwirkt.

Bei allen Ausführungsbeispielen der Fig. 2 bis Fig. 5 wird das Bremselement 9 stets in seine Bremsposition gedrängt, so dass bei nicht aktiviertem Freigabemittel 12 stets eine Bremswirkung realisiert wird. Das Freigabemittel 12 ist in Form eines elektrisch betätigten Aktors ausgebildet, der das Bremselement 9 in seine Freigabeposition bewegt, wenn er aktiviert wird.

Gemäß dem Ausführungsbeispiel der Fig. 4 ist das Bremselement 9 zum formschlüssigen Zusammenwirken mit einem Profil in der Lauffläche 10a des Antriebsrades 6 ausgebildet, um eine Bewegung des Arbeitsgerätes 1 zu stoppen. Dazu ist das Bremselement 9 zusammen mit dem Spannmittel 11 und dem Freigabemittel 12 am Rahmen 3a der Antriebseinheit 3 gehalten. Ferner ist ein Freigabemittel 12 in Form eines elektrisch betätigten Aktors vorhanden, mit dem das Bremselement 9 entgegen der Kraft des Spannmittels 11 in eine Freigabeposition bewegbar ist. Das Freigabemittel 12 weist mindestens eine Zylinderspule auf, in der ein Tauchkolben 14 geführt ist, an dem das Bremselement 9 gehalten ist. Wird das Freigabemittel 12 von der Steuereinrichtung, beispielsweise nach dem Einschalten des Arbeitsgeräts 1 und für die Dauer des normalen Betriebs, betätigt, wird der Tauchkolben 14 von der Zylinderspule translatorisch entlang seiner Längsachse bewegt, so dass sich auch das Bremselement 9 bewegt und eine Rotation des Antriebsrades 6 freigibt.

Bei dem Ausführungsbeispiel der Fig. 5 ist das Bremselement 9 zum formschlüssigen Zusammenwirken mit Zähnen eines Zahnrades im Getriebe 5 angeordnet, um die Bewegung des Arbeitsgerätes 1 zu stoppen. Dazu ist das Bremselement 9 zusammen mit dem Spannmittel 11 und dem Freigabemittel 12 an dem Gehäuse 5a des Getriebes 5 angeordnet.

Die Antriebseinheiten 3 der Ausführungsbeispiele der Fig. 2 bis Fig. 5 sind in vertikaler Richtung, also im Betrieb nach unten, bewegbar in einem Gehäuse 2 eines Arbeitsgerätes 1 gemäß Fig. 1 anordenbar. Zur Spannungsversorgung des Motors 4 sowie des Freigabemittels 12 ist eine Steckerbuchse 13 vorgesehen.

Die Erfindung ist nicht auf die dargestellten und beschriebenen Ausführungsbeispiele beschränkt, sondern umfasst auch alle im Sinne der Erfindung gleichwirkenden Ausführungen. Der Umfang der Erfindung wird dabei durch den Gegenstand der Ansprüche festgelegt.

### Bezugszeichenliste

- 1: Arbeitsgerät
- 2: Gehäuse
- 3: Antriebseinheit
- 3a: Rahmen von 3
- 4: Motor
- 5: Getriebe
- 5a: Gehäuse von 5
- 6: Antriebsrad
- 7: Bearbeitungsumgebung
- 8: Umgebungssensorsystem
- 9: Bremselement
- 9a: Erster Abschnitt
- 9b: Zweiter Abschnitt
- 9c: Erste Schrägfläche
- 9d: Zweite Schrägfläche
- 10: Sich bewegendes Bauteil
- 10a: Lauffläche
- 10b: Bremskörper
- 11: Spannmittel
- 12: Freigabemittel
- 13: Steckerbuchse
- 14: Tauchkolben
- 15: Profilgeometrie
- 16: Motorwelle
- 17: Umfangsfläche
- 18: Fangnocken
- 19: Seitenflächen
- 20: Fangtasche
- 21: Zuführschräge
- 22: Führungsvorsprung

- Z: Achse

## Patentansprüche

1. Arbeitsgerät (1), mit mindestens einem Gehäuse (2), mindestens einer Antriebseinheit (3) und mindestens einer Steuereinrichtung, wobei die Antriebseinheit (3) mindestens einen Motor (4) und mindestens ein Antriebsrad (6) aufweist, wobei das Arbeitsgerät (1) dazu ausgebildet und eingerichtet ist, sich in einer Bearbeitungsumgebung (7) autonom fortzubewegen, wobei ein Notbremssystem mit mindestens einem Bremselement (9) vorhanden ist, dass das Notbremssystem von der Steuereinrichtung steuerbar ist,
**dadurch gekennzeichnet, dass**
das Bremselement (9) nach einem Auslösen des Notbremssystems zum Erzielen einer Bremswirkung formschlüssig mit mindestens einem sich im Betrieb des Arbeitsgerätes (1) bewegenden Bauteil (10) der Antriebseinheit (3) zusammenwirkt.

2. Arbeitsgerät (1) nach Anspruch 1,
**dadurch gekennzeichnet, dass**
der Motor (4) mindestens eine Motorwelle (16) aufweist, dass an der Motorwelle (16) mindestens ein Bremskörper (10b) angeordnet ist, dass der Bremskörper (10b) eine Profilgeometrie (15) aufweist, insbesondere eine auf einem Außenumfang ausgebildete Profilgeometrie (15) aufweist, und dass das Bremselement (9) zum formschlüssigen Zusammenwirken mit der Profilgeometrie (15) ausgebildet ist.

3. Arbeitsgerät (1) nach Anspruch 2,
**dadurch gekennzeichnet, dass**
die Profilgeometrie (15) mindestens einen Fangnocken (18) oder eine Mehrzahl von Fangnocken (18), insbesondere auf einem Außenumfang des Bremskörpers (10b), aufweist.

4. Arbeitsgerät (1) nach Anspruch 3,
**dadurch gekennzeichnet, dass**
an mindestens einem Fangnocken (18) mindestens eine Fangtasche (20) ausgebildet ist, insbesondere dass die Fangtasche (20) mindestens einen Hinterschnitt aufweist, vorzugsweise dass mindestens eine Seitenfläche (19) des Fangnockens (18) zum Ausbilden einer Fangtasche (20) mit einer Umfangsfläche (17) des Bremskörpers (19b) einen Winkel von weniger als 90°, insbesondere etwa zwischen 45° und 75° einschließt.

5. Arbeitsgerät (1) nach Anspruch 4,
**dadurch gekennzeichnet, dass**
an jede Fangtasche (20) in Umfangsrichtung angrenzend mindestens eine Zuführschräge (21) ausgebildet ist.

6. Arbeitsgerät (1) nach einem der Ansprüche 1 bis 5,
**dadurch gekennzeichnet, dass**
das Bremselement (9) mindestens einen ersten keilförmigen Abschnitt (9a) zum Zusammenwirken mit mindestens einer Fangtasche (20) an dem Bremskörper (10b) aufweist, vorzugsweise dass das Bremselement (10b) mindestens einen zweiten keilförmigen Abschnitt (9b) aufweist.

7. Arbeitsgerät (1) nach einem der Ansprüche 1 bis 6,
**dadurch gekennzeichnet, dass**
das Bremselement (10b) zumindest um eine im Wesentlichen parallel zur Motorwelle (16) verlaufende Achse (Z) verschwenkbar angeordnet ist.

8. Arbeitsgerät (1) nach einem der Ansprüche 1 bis 7,
**dadurch gekennzeichnet, dass**
das Bremselement (9) zwei gegenläufig zueinander geneigte Schrägflächen (9c,9d) aufweist, und dass die Schrägflächen (9c,9d) zum Kontaktieren des Bremskörpers (10b) ausgerichtet sind, insbesondere dass die Schrägflächen 9c,9d) in einem Winkel zwischen 100° und 130° zueinander geneigt sind.

9. Arbeitsgerät (1) nach Anspruch 8,
**dadurch gekennzeichnet, dass**
zwischen den beiden Schrägflächen (9c,9d) mindestens ein Führungsvorsprung (22) ausgebildet ist, insbesondere ein Führungsvorsprung (22) mit einem halbkreisförmigen Querschnitt ausgebildet ist.

10. Arbeitsgerät (1) nach einem der Ansprüche 1 bis 9,
**dadurch gekennzeichnet, dass**
der Motor (4) als Außenläufer mit einem außenliegenden Rotor ausgebildet ist, dass der Rotor eine Profilgeometrie (15) aufweist und dass das Bremselement (9) zum formschlüssigen Zusammenwirken mit dem außenliegenden Rotor ausgebildet ist und/oder dass die Antriebseinheit (3) mindestens ein Getriebe (5) aufweist, und dass das Bremselement (9) zum formschlüssigen Zusammenwirken mit mindestens einem rotierenden Bauteil des Getriebes (5) ausgebildet ist und/oder dass das Bremselement (9) zum formschlüssigen Zusammenwirken mit mindestens einem Antriebsrad (6) ausgebildet ist.

11. Arbeitsgerät (1) nach einem der Ansprüche 1 bis 10,
**dadurch gekennzeichnet, dass**
mindestens ein Spannmittel (11) vorgesehen ist, dass mit dem Spannmittel (11) eine Kraft auf das Bremselement (9) bewirkbar ist, die das Bremselement (9) in eine Bremsposition drängt, dass mindestens ein Freigabemittel (12) vorhanden ist, und dass das Freigabemittel (12) dazu ausgebildet ist, das Bremselement (9) entgegen der Kraft des Spannmittels (11) in eine Freigabeposition zu bewegen.

12. Arbeitsgerät (1) nach einem der Ansprüche 1 bis 11,
**dadurch gekennzeichnet, dass**
das Bremselement (9) durch einen Aktor in eine Bremsposition bewegbar ist, und dass der Aktor elektrisch, hydraulisch oder pneumatisch betätigbar ist.

13. Arbeitsgerät (1) nach einem der Ansprüche 1 bis 12,
**dadurch gekennzeichnet, dass**
die Steuereinrichtung dazu eingerichtet und ausgebildet ist, um nach einem Notbremsvorgang eine Freigabe des Notbremssystems zu bewirken, indem die Antriebseinheit (3) derart angesteuert wird, zunächst eine Drehbewegung des blockierten Bauteils (10) in eine Drehrichtung zu bewirken, die der Drehrichtung des Bauteils (10) vor Auslösen des Notbremssystems entgegengesetzt ist, um anschließend das Bremselement (9) mit dem Freigabemittel (12) in seine Freigabeposition zu bewegen.

14. Arbeitsgerät (1) nach einem der Ansprüche 1 bis 13,
**dadurch gekennzeichnet, dass**
das Notbremssystem derart ausgebildet und eingerichtet ist, dass das Notbremssystem im ausgeschalteten Zustand des Arbeitsgerätes (1) ausgelöst ist, und dass das Notbremssystem nach dem Einschalten des Arbeitsgerätes (1) freigegeben wird.

## Claims

1. Working device (1), having at least one housing (2), at least one drive unit (3) and at least one control device, the drive unit (3) having at least one motor (4) and at least one drive wheel (6), the working device (1) being designed and set up to move autonomously in a processing environment (7), an emergency braking system having at least one braking element (9) being present, and the emergency braking system being controllable by the control device,
**characterized in that**
the braking element (9) interacts positively with at least one component (10) of the drive unit (3) moving during operation of the working device (1) after the emergency braking system has been triggered in order to achieve a braking effect.

2. Working device (1) according to claim 1,
**characterized in that**
the motor (4) has at least one motor shaft (16), that at least one brake body (10b) is arranged on the motor shaft (16), that the brake body (10b) has a profile geometry (15), in particular a profile geometry (15) formed on an outer circumference, and that the brake element (9) is designed to interact positively with the profile geometry (15).

3. Working device (1) according to claim 2,
**characterized in that**
the profile geometry (15) has at least one catch cam (18) or a plurality of catch cams (18), in particular on an outer circumference of the brake body (10b).

4. Working device (1) according to claim 3,
**characterized in that**
at least one catch pocket (20) is formed on at least one catch cam (18), in particular **in that** the catch pocket (20) has at least one undercut, preferably **in that** at least one side surface (19) of the catch cam (18) forms an angle of less than 90°, in particular between approximately 45° and 75°, with a circumferential surface (17) of the brake body (19b) in order to form a catch pocket (20).

5. Working device (1) according to claim 4,
**characterized in that**
at least one feed slope (21) is formed adjacent to each catch pocket (20) in the circumferential direction.

6. Working device (1) according to any one of claims 1 to 5,
**characterized in that**
the braking element (9) has at least one first wedge-shaped section (9a) for interacting with at least one catch pocket (20) on the brake body (10b), preferably **in that** the braking element (10b) has at least one second wedge-shaped section (9b).

7. Working device (1) according to any one of claims 1 to 6,
**characterized in that**
the brake element (10b) is arranged so as to be pivotable at least about an axis (Z) running essentially parallel to the motor shaft (16).

8. Working device (1) according to any one of claims 1 to 7,
**characterized in that**
the braking element (9) has two inclined surfaces (9c, 9d) inclined in opposite directions to one another, and **in that** the inclined surfaces (9c, 9d) are aligned for contacting the brake body (10b), in particular **in that** the inclined surfaces (9c, 9d) are inclined at an angle of between 100° and 130° to one another.

9. Working device (1) according to claim 8,
**characterized in that**
at least one guide projection (22) is formed between the two inclined surfaces (9c, 9d), in particular a guide projection (22) with a semicircular cross-section is formed.

10. Working device (1) according to any one of claims 1 to 9,
**characterized in that**
the motor (4) is designed as an external rotor with an external rotor, **in that** the rotor has a profile geometry (15) and **in that** the brake element (9) is designed to interact positively with the external rotor and/or **in that** the drive unit (3) has at least one gearbox (5), and **in that** the brake element (9) is designed to interact positively with at least one rotating component of the gearbox (5) and/or **in that** the brake element (9) is designed to interact positively with at least one drive wheel (6).

11. Working device (1) according to any one of claims 1 to 10,
**characterized in that**
at least one clamping means (11) is provided, **in that** the clamping means (11) can be used to exert a force on the braking element (9) which urges the braking element (9) into a braking position, **in that** at least one release means (12) is provided, and **in that** the release means (12) is designed to move the braking element (9) into a release position counter to the force of the clamping means (11).

12. Working device (1) according to any one of claims 1 to 11,
**characterized in that**
the braking element (9) can be moved into a braking position by an actuator, and that the actuator can be actuated electrically, hydraulically or pneumatically.

13. Working device (1) according to any one of claims 1 to 12,
**characterized in that**
the control device is set up and designed to effect a release of the emergency braking system after an emergency braking operation by controlling the drive unit (3) in such a way that it first causes a rotary movement of the blocked component (10) in a direction of rotation which is opposite to the direction of rotation of the component (10) before the emergency braking system is triggered, in order to then move the braking element (9) with the release means (12) into its release position.

14. Working device (1) according to any one of claims 1 to 13,
**characterized in that**
the emergency braking system is designed and set up in such a way that the emergency braking system is triggered when the working device (1) is switched off, and that the emergency braking system is released after the working device (1) is switched on.

## Revendications

1. Appareil de travail (1), avec au moins un boîtier (2), au moins une unité d'entraînement (3) et au moins un dispositif de commande, l'unité d'entraînement (3) présentant au moins un moteur (4) et au moins une roue d'entraînement (6), l'appareil de travail (1) étant conçu et configuré pour se déplacer de manière autonome dans un environnement de traitement (7), un système de freinage d'urgence avec au moins un élément de freinage (9) étant présent, en ce que le système de freinage d'urgence peut être commandé par le dispositif de commande,
**caractérisé en ce que**
l'élément de freinage (9) coopère par complémentarité de forme, après un déclenchement du système de freinage d'urgence, pour obtenir un effet de freinage, avec au moins un composant (10) de l'unité d'entraînement (3) qui se déplace pendant le fonctionnement de l'appareil de travail (1).

2. Appareil de travail (1) selon la revendication 1,
**caractérisé en ce que**
le moteur (4) présente au moins un arbre de moteur (16), **en ce qu'**au moins un corps de frein (10b) est disposé sur l'arbre de moteur (16), **en ce que** le corps de frein (10b) présente une géométrie de profil (15), en particulier une géométrie de profil (15) réalisée sur une périphérie extérieure, et **en ce que** l'élément de frein (9) est réalisé pour coopérer par complémentarité de forme avec la géométrie de profil (15).

3. Appareil de travail (1) selon la revendication 2,
**caractérisé en ce que**
la géométrie de profil (15) présente au moins une came d'arrêt (18) ou une pluralité de cames d'arrêt (18), en particulier sur une périphérie extérieure du corps de frein (10b).

4. Appareil de travail (1) selon la revendication 3,
**caractérisé en ce que**
au moins une poche de capture (20) est formée sur au moins une came d'arrêt (18), en particulier **en ce que** la poche de capture (20) présente au moins une contre-dépouille, de préférence **en ce qu'**au moins une surface latérale (19) de la came de capture (18) forme un angle inférieur à 90°, en particulier entre 45° et 75° environ, avec une surface circonférentiel (17) de l'élément de frein (19b) pour former une poche de capture (20)

5. Appareil de travail (1) selon la revendication 4,
**caractérisé en ce que**
au moins une pente d'alimentation (21) est formé à côté de chaque poche de capture (20) dans le sens circonférentiel.

6. Appareil de travail (1) selon l'une quelconque des revendications 1 à 5,
**caractérisé en ce que**
l'élément de freinage (9) présente au moins une première section en forme de coin (9a) pour coopérer avec au moins une poche de capture (20) sur le corps de frein (10b), de préférence que l'élément de freinage (10b) présente au moins une deuxième section en forme de coin (9b).

7. Appareil de travail (1) selon l'une quelconque des revendications 1 à 6,
**caractérisé en ce que**
l'élément de freinage (10b) est disposé de manière à pouvoir pivoter au moins autour d'un axe (Z) s'étendant essentiellement parallèle à l'arbre moteur (16).

8. Appareil de travail (1) selon l'une quelconque des revendications 1 à 7,
**caractérisé en ce que**
l'élément de freinage (9) présente deux surfaces inclinées (9c, 9d) inclinées en sens inverse l'une par rapport à l'autre, et **en ce que** les surfaces inclinées (9c, 9d) sont alignées pour entrer en contact avec l'élément de freinage (10b), en particulier **en ce que** les surfaces inclinées (9c, 9d) sont inclinées l'une par rapport à l'autre à un angle entre 100° et 130°.

9. Appareil de travail (1) selon la revendication 8,
**caractérisé en ce que**
au moins une saillie de guidage (22) est formée entre les deux surfaces inclinées (9c, 9d), en particulier une saillie de guidage (22) avec une section transversale semi-circulaire.

10. Appareil de travail (1) selon l'une quelconque des revendications 1 à 9,
**caractérisé en ce que**
le moteur (4) est conçu comme un rotor externe avec un rotor situé à l'extérieur, **en ce que** le rotor présente une géométrie de profil (15) et **en ce que** l'élément de freinage (9) est conçu pour coopérer par complémentarité de forme avec le rotor externe et/ou **en ce que** l'unité d'entraînement (3) présente au moins un engrenage (5), et **en ce que** l'élément de freinage (9) est conçu pour coopérer par complémentarité de forme avec au moins un composant rotatif de l'engrenage (5) et/ou **en ce que** l'élément de freinage (9) est conçu pour coopérer par complémentarité de forme avec au moins une roue d'entraînement (6).

11. Appareil de travail (1) selon l'une quelconque des revendications 1 à 10,
**caractérisé en ce que**
au moins un moyen de serrage (11) est prévu, **en ce que** le moyen de serrage (11) permet d'exercer une force sur l'élément de freinage (9) qui pousse l'élément de freinage (9) dans une position de freinage, **en ce qu'**au moins un moyen de libération (12) est prévu, et **en ce que** le moyen de libération (12) est conçu pour déplacer l'élément de freinage (9) dans une position de libération à l'encontre de la force du moyen de serrage (11).

12. Appareil de travail (1) selon l'une quelconque des revendications 1 à 11,
**caractérisé en ce que**
l'élément de freinage (9) peut être déplacé par un actionneur dans une position de freinage, et **en ce que** l'actionneur peut être actionné électriquement, hydrauliquement ou pneumatiquement.

13. Appareil de travail (1) selon l'une quelconque des revendications 1 à 12,
**caractérisé en ce que**
le dispositif de commande est conçu et configuré pour provoquer un déblocage du système de freinage d'urgence après un freinage d'urgence, **en ce que** l'unité d'entraînement (3) est commandée de telle sorte qu'elle provoque d'abord un mouvement de rotation de l'élément bloqué (10) dans un sens de rotation opposé au sens de rotation de l'élément (10) avant le déclenchement du système de freinage d'urgence, pour déplacer ensuite l'élément de freinage (9) avec le moyen de déblocage (12) dans sa position de déblocage.

14. Appareil de travail (1) selon l'une quelconque des revendications 1 à 13,
**caractérisé en ce que**
le système de freinage d'urgence est conçu et configuré de telle sorte que le système de freinage d'urgence est déclenché lorsque l'appareil de travail (1) est déconnecté, et que le système de freinage d'urgence est relâché après la mise en marche de l'appareil de travail (1).
